# EUROPÄISCHE PATENTSCHRIFT

(11) **EP 3 679 623 B1**
(45) Veröffentlichungstag und Bekanntmachung des Hinweises auf die Patenterteilung: **09.08.2023**
(21) Anmeldenummer: 18755851.5
(22) Anmeldetag: 27.08.2018
(51) Int. Cl.: H01M 10/42, B25B 21/00

(54) **VERFAHREN ZUM STEUERN EINES AKKUMULATORS AN EINER WERKZEUGMASCHINE**
METHOD FOR CONTROLLING A BATTERY ON A MACHINE TOOL
PROCÉDÉ DE COMMANDE D'UN ACCUMULATEUR D'UNE MACHINE-OUTIL

(30) Priorität: 07.09.2017 EP 17189730
(43) Veröffentlichungstag der Anmeldung: 15.07.2020
(73) Patentinhaber: Hilti Aktiengesellschaft, 9494 Schaan (LI)
(72) Erfinder: HAUSER, Klaus, 86830 Schwabmünchen (DE); CANDUSSIO, Michael, 82140 Olching (DE); MAYER, Stefan, 85221 Dachau (DE); KOSCHECK, David, 86163 Augsburg (DE)
(74) Vertreter: Hilti Aktiengesellschaft Corporate Intellectual Property
(86) Internationale Anmeldenummer: PCT/EP2018/072990
(87) Internationale Veröffentlichungsnummer: WO 2019/048275

(56) Entgegenhaltungen:
- EP-A1- 2 562 905
- DE-A1-102015 010 739
- US-A1- 2016 064 776

## Beschreibung

Die vorliegende Erfindung betrifft ein Verfahren zur Steuerung eines Akkumulators an einer Werkzeugmaschine, wobei der Akkumulator eine erste Datenschnittstelle sowie einen Aufweckschaltkreis enthält zum Aktivieren einer Steuerungselektronik des Akkumulators und die Werkzeugmaschine eine zweite Datenschnittstelle sowie eine Steuerung enthält, und wobei die Datenschnittstellen über eine erste und zweite Kommunikationsleitung für eine differentielle Kommunikation zwischen dem Akkumulator und der Werkzeugmaschine miteinander verbunden sind.

Die vorliegende Erfindung betrifft des Weiteren ein System enthaltend einen Akkumulator und eine Werkzeugmaschine zur Durchführung des Verfahrens, wobei der Akkumulator eine erste Datenschnittstelle sowie einen Aufweckschaltkreis enthält zum Aktivieren einer Steuerungselektronik des Akkumulators und die Werkzeugmaschine eine zweite Datenschnittstelle sowie eine Steuerung enthält, und wobei die Datenschnittstellen über eine erste und zweite Kommunikationsleitung für eine differentielle Kommunikation zwischen dem Akkumulator und der Werkzeugmaschine miteinander verbunden sind.

Darüber betrifft die Erfindung einen Akkumulator zur Durchführung des Verfahrens, wobei der Akkumulator eine erste Datenschnittstelle sowie einen Aufweckschaltkreis enthält zum Aktivieren einer Steuerungselektronik des Akkumulators.

Kabellose Werkzeugmaschine können zur Strom- bzw. Energieversorgung mit einem Akkumulator, auch Akku genannt, betrieben werden. Hierzu wird der Akkumulator über eine entsprechende Schnittstelle mit der Werkzeugmaschine so verbunden, dass elektrischer Strom von dem Akkumulator zur Werkzeugmaschine fließen kann. Bei der kabellosen Werkzeugmaschine kann es sich beispielsweise um einen Akku-Schrauber, einen Bohrhammer oder dergleichen handeln.

Auf dem Markt befindliche Akkumulatoren enthalten für gewöhnlich eine Anzahl an Speicherzellen bzw. Energiespeicherzellen für elektrische Energie bzw. für eine elektrische Spannung. Zur Kontrolle eines Lade- bzw. Entladevorgangs der Energiespeicherzellen, bei dem die Energiespeicherzellen entweder mit einer elektrischen Energie geladen oder die elektrische

Energie aus den Speicherzellen genommen (entladen) wird, verfügt ein moderner Akkumulator über eine Steuerungselektronik zur Regelung und Steuerung verschiedener Vorgänge in dem Akkumulator. Die Speicherzellen werden auch als Akku-Zellen oder Sekundärzellen bezeichnet. Um elektrische Energie eines Akkumulators zu sparen wird die Steuerungselektronik des Akkumulators in einen Deaktivierungsmodus (auch als Schlafmodus bzw. Schlafzustand bezeichnet) versetzt, wenn die akkubetriebene Werkzeugmaschine für eine gewisse Zeitdauer nicht betrieben wird. In diesem Deaktivierungsmodus fließt kein elektrischer Strom von dem Akkumulator in die Steuerelektronik und/oder zu der Werkzeugmaschine.

Wenn jedoch die akkubetriebene Werkzeugmaschine wieder in Betrieb genommen werden soll, damit erneut elektrischer Strom von dem Akkumulator zu den elektrischen Verbrauchern der Werkzeugmaschine fließen kann, muss der Akkumulator zunächst reaktiviert, d.h. von dem Deaktivierungsmodus in einen Aktivierungsmodus (d.h. aufgeweckt) versetzt werden. Der Akkumulator muss sich im Aktivierungsmodus befinden, um beispielsweise die Strommenge bzw. die Stromstärke zu steuern, die zu der Werkzeugmaschine fließt, oder die Temperatur des Akkumulators zu überwachen.

Eine derartige Reaktivierung des Akkumulators stellt jedoch einen gewissen Aufwand dar, da mit Hilfe eines gesonderten Signals in Form eines Spannungsimpulses zunächst ein Aufweckschaltkreis des Akkumulators aktiviert werden muss. Der Aufweckschaltkreis (re-)aktiviert anschließend die Steuerungselektronik des Akkumulators, damit die Versorgung der Werkzeugmaschine mit elektrischem Strom fortgesetzt werden kann.

Akkumulatoren gemäß dem Stand der Technik bieten zur Lösung dieses Problems eine separate Leitung von der Steuerung der Werkzeugmaschine zum Aufweckschaltkreis des Akkumulators an. Die Bereitstellung einer derartigen Leitung ist jedoch aufwendig und erzeugt zusätzliche Kosten sowie Platzprobleme. DE 10 2015 010739 A1 offenbart ein Verfahren zur Steuerung eines Akkumulators an einer Werkzeugmaschine aus dem Stand der Technik.

Aufgabe der vorliegenden Erfindung ist es daher, ein Verfahren zur Steuerung eines Akkumulators an einer Werkzeugmaschine bereitzustellen, mit dem das vorstehend genannte Problem gelöst werden kann. Des Weiteren ist es Aufgabe der vorliegenden Erfindung ein System enthaltend einen Akkumulator und eine Werkzeugmaschine zur Durchführung des Verfahrens zur Verfügung zu stellen, mit dem das vorstehend genannte Problem gelöst werden kann. Darüber hinaus ist es Aufgabe der vorliegenden Erfindung einen Akkumulator zur Verfügung zu stellen, um das vorstehend genannte Problem zu lösen.

Die Aufgabe wird gelöst durch den Gegenstand des unabhängigen Anspruchs 1, 2 und 3.

Die Aufgabe wird insbesondere gelöst durch ein Verfahren zur Steuerung eines Akkumulators an einer Werkzeugmaschine, wobei der Akkumulator eine erste Datenschnittstelle sowie einen Aufweckschaltkreis enthält zum Aktivieren einer Steuerungselektronik des Akkumulators und die Werkzeugmaschine eine zweite Datenschnittstelle sowie eine Steuerung enthält, und wobei die Datenschnittstellen über eine erste und zweite Kommunikationsleitung für eine differentielle Kommunikation zwischen dem Akkumulator und der Werkzeugmaschine miteinander verbunden sind.

Erfindungsgemäß enthält das Verfahren die folgenden Verfahrensschritte:
- Einstellen der Steuerungselektronik des Akkumulators in einen Deaktivierungsmodus, sodass kein Strom von dem Akkumulator in die Steuerungselektronik und zu der Werkzeugmaschine fließt;
- Senden wenigstens eines Signals von der Werkzeugmaschine zu dem Akkumulator über die erste und zweite Kommunikationsleitung;
- Aktivieren des Aufweckschaltkreises zum Aktivieren einer Steuerungselektronik durch Detektieren eines Spannungswertes von der ersten oder zweiten Kommunikationsleitung, wobei der Spannungswert entweder dem dominanten oder rezessiven Zustand der ersten oder zweiten Kommunikationsleitung entspricht;
- Einstellen der Steuerungselektronik des Akkumulators in einen Aktivierungsmodus durch den Aufweckschaltkreis; und
- Freigabe einer Stromentnahme von dem Akkumulator durch die Werkzeugmaschine.

Hierdurch kann auf einfache Art und Weise erreicht werden, dass der Aufweckschaltkreis des Akkumulators mit Hilfe der differentiellen Kommunikation ein entsprechendes Signal in Form eines Stromimpulses detektiert, um die Steuerungselektronik des Akkumulators zu reaktivieren. Die dargestellte Lösung ist sowohl platz- als auch kostensparend, da ein bereits vorhandenes Kommunikationssystem verwendet werden kann.

Die erste und zweite Kommunikationsleitung für eine differentielle Kommunikation zwischen dem Akkumulator und der Werkzeugmaschine sind Bestandteile eines Kommunikationssystems. Das Kommunikationssystem kann dabei als CAN-Datenbus ausgestaltet sein. Es ist jedoch auch möglich, dass ein anderes geeignetes Kommunikationssystem für eine differentielle Kommunikation zwischen dem Akkumulator und der Werkzeugmaschine verwendet wird.

Die Freigabe einer Stromentnahme von dem Akkumulator durch die Werkzeugmaschine bedeutet, dass die Werkzeugmaschine mit Hilfe einer Strommesseinrichtung in der Lage ist, den Strom, der von dem Akkumulator zur Versorgung der Werkzeugmaschine bereitgestellt wird, zu messen und eine maximal mögliche Strommenge bzw. ein Versorgungsstrom mit einer maximal möglichen Stromstärke von dem Akkumulator zu der Werkzeugmaschine fließen zu lassen. Hierzu wird der Akkumulator durch die Werkzeugmaschine so eingestellt, dass nur ein maximal möglicher Versorgungsstrom zu der Werkzeugmaschine gelangen kann.

Die Aufgabe wird des Weiteren gelöst durch ein System enthaltend einen Akkumulator und eine Werkzeugmaschine zur Durchführung des Verfahrens, wobei der Akkumulator eine erste Datenschnittstelle sowie einen Aufweckschaltkreis enthält zum Aktivieren einer Steuerungselektronik des Akkumulators und die Werkzeugmaschine eine zweite Datenschnittstelle sowie eine Steuerung enthält, und wobei die Datenschnittstellen über eine erste und zweite Kommunikationsleitung für eine differentielle Kommunikation zwischen dem Akkumulator und der Werkzeugmaschine miteinander verbunden sind.

Darüber hinaus wird die Aufgabe gelöst durch einen Akkumulator zur Durchführung des Verfahrens, wobei der Akkumulator eine erste Datenschnittstelle sowie einen Aufweckschaltkreis enthält zum Aktivieren einer Steuerungselektronik des Akkumulators.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: einen Querschnitt durch eine Werkzeugmaschine mit einem angeschlossenen Akkumulator; und
- Fig. 2: einen Querschnitt durch ein Fussteil der Werkzeugmaschine mit einem angeschlossenen Akkumulator.

### Ausführungsbeispiele:

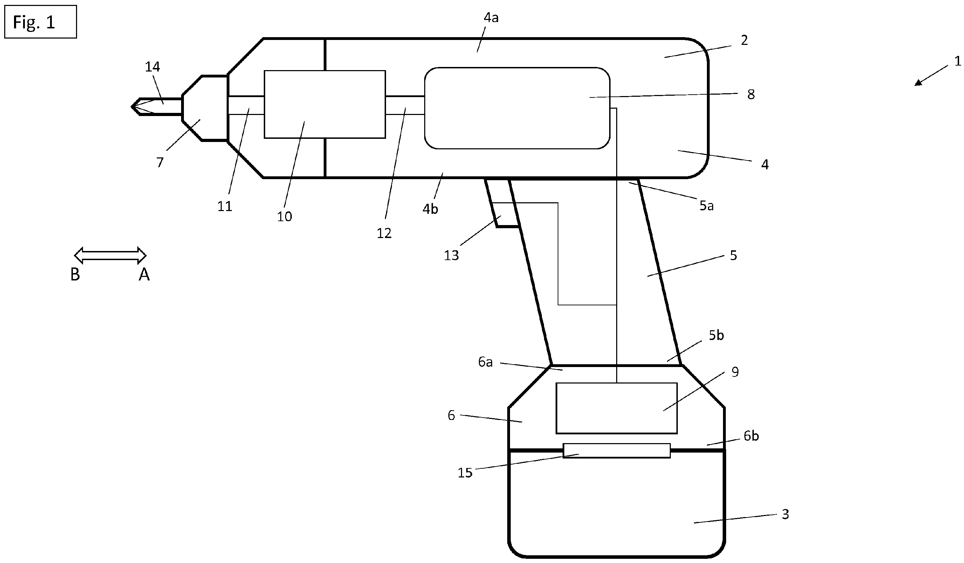

In Figur 1 ist ein erfindungsgemäßes System 1 mit einer Werkzeugmaschine 2 und einem Akkumulator 3 dargestellt. Der Akkumulator 3 ist mit der Werkzeugmaschine verbunden und dient zur Versorgung der elektrischen Verbraucher der Werkzeugmaschine 2 mit elektrischer Energie. Bei der Versorgung fließt elektrischer Strom von dem Akkumulator 3 zu der Werkzeugmaschine 2.

Wie in Figur 1 dargestellt, ist die Werkzeugmaschine 2 in Form eines Akku-Schraubers dargestellt. Gemäß anderer alternativer Ausführungsformen kann die Werkzeugmaschine 2 auch in Form einer Bohrmaschine, einer Säge oder dergleichen ausgestaltet sein.

Die als Akku-Schrauber ausgestaltete Werkzeugmaschine 2 enthält im Wesentlichen ein Gehäuse 4, ein Handgriff 5, ein Fussteil 6, eine Werkzeugaufnahme 7, einen elektrischen Antrieb 8 in Form eines Elektromotors, eine Steuerung 9, ein Getriebe 9a, eine Antriebswelle 11, eine Abtriebswelle 12 und einen Aktivierungsschalter 13.

Der als Elektromotor ausgestaltet elektrische Antrieb 8, das Getriebe 10, die Antriebswelle 11, die Abtriebswelle 12 und die Steuerung 9 sind in dem Gehäuse 4 positioniert. Der Antrieb 8, das Getriebe 10, die Antriebswelle 11 und die Abtriebswelle 12 sind so zueinander und in dem Gehäuse 10 positioniert, dass ein von dem Antrieb 8 erzeugtes Drehmoment an die Abtriebswelle 12 übertragen wird. Die Abtriebswelle 12 überträgt das Drehmoment auf das Getriebe 10, welches wiederum ein Drehmoment an die Antriebswelle 11 weitergibt. Über die Antriebswelle 11 wird durch Übertragung des Drehmoments die Werkzeugaufnahme 7 angetrieben. Wie in Figur 1 dargestellt, ist in der Werkzeugaufnahme 7 ein Werkzeug 14 in Form eines Bits gehalten. Mit Hilfe des Bits kann eine Schraube in einen Werkstoff eingeschraubt werden. Weder die Schraube noch der Werkstoff sind in den Figuren dargestellt.

Wie weiterhin in Figur 1 gezeigt, enthält das Gehäuse 4 eine Oberseite 4a und eine Unterseite 4b. Der Handgriff 5 enthält ein erstes Ende 5a und ein zweites Ende 5b. An der Unterseite 4b des Gehäuses 4 ist das erste Ende 5a des Handgriffs 5 befestigt. Des Weiteren enthält das Fussteil 6 ein oberes Ende 6a und ein unteres Ende 6b. Das obere Ende 6a des Fussteils 6 ist an dem zweiten Ende 5b des Handgriffs 5 befestigt. Das untere Ende 6b des Fussteils 6 enthält eine mechanische, elektrische und elektronische Schnittstelle 15 und dient zum mechanischen, elektrischen und elektronischen Verbinden mit dem Akkumulator 3. Zur Aufnahme von elektrischen Strom enthält die Schnittstelle 15 eine Anzahl an Stromanschlüssen 16. Die Schnittstelle 15 enthält darüber hinaus Datenanschlüsse 17 zum Senden und Empfangen von Signalen zwischen der Werkzeugmaschine 2 und dem Akkumulator 3.

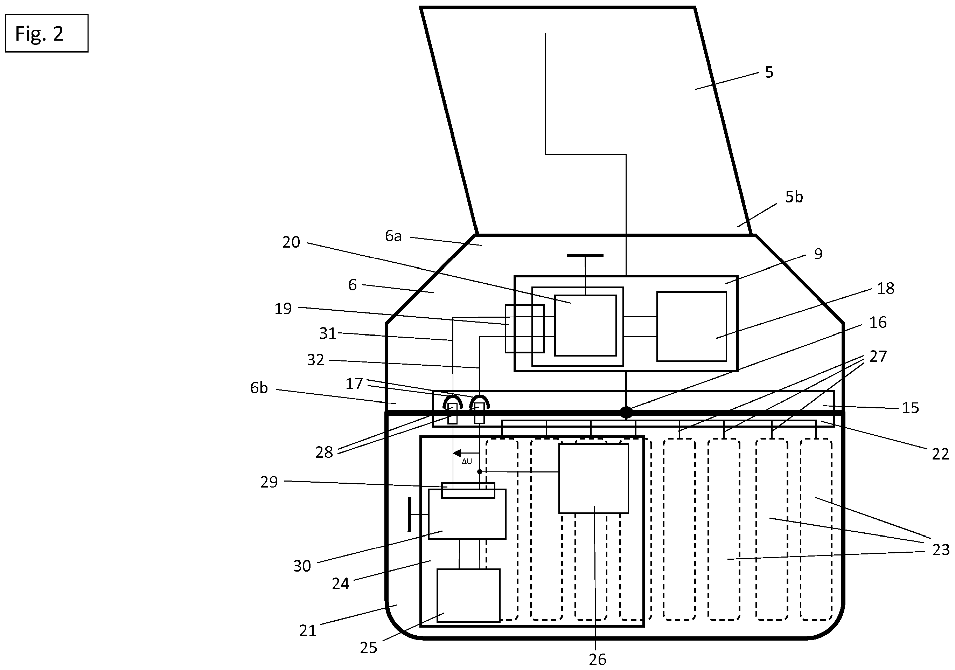

Wie den Figuren 1 und 2 zu entnehmen ist, ist die Steuerung 9 der Werkzeugmaschine 2 in dem Fussteil 6 der Werkzeugmaschine 2 positioniert. Die Steuerung 9 der Werkzeugmaschine 2 dient zum Steuern und Regeln verschiedener Vorgänge in Bezug auf die Werkzeugmaschine 2 sowie in Bezug auf den Akkumulator 3. Die Steuerung 9 steuert insbesondere den Strom bzw. die Stromstärke, die von dem Akkumulator 3 zu der Werkzeugmaschine 2 und insbesondere zum Antreiben des als Elektromotor ausgebildeten Antriebs 8 fließt.

Die Steuerung 9 der Werkzeugmaschine 2 enthält dabei einen Mikrocontroller 18 (auch als MCU bezeichnet) sowie eine Datenschnittstelle 19 mit einem ersten Transceiver 20 als Bestandteil eines Kommunikationssystems für eine differentielle Kommunikation zwischen dem Akkumulator 3 und der Werkzeugmaschine 2. Die Datenschnittstelle 19 der Werkzeugmaschine 2 ist dabei eine von insgesamt zwei Datenschnittstellen zu dem Kommunikationssystem für die differentielle Kommunikation zwischen dem Akkumulator 3 und der Werkzeugmaschine 2. Wie nachfolgend noch beschreiben ist enthält der Akkumulator 3 die andere der beiden Datenschnittstelle 29.

Der Akkumulator 3 enthält im Wesentlichen ein Gehäuse 21 mit einer Akku-Schnittstelle 22. In dem Gehäuse 21 des Akkumulators 3 sind eine Vielzahl an Energiespeicherzellen 23 sowie eine Steuerungselektronik 24 mit einem Mikrocontroller 25 und einem Aufweckschaltkreis 26 (auch als Wake-Up-Circuit bezeichnet) enthalten. Der Aufweckschaltkreis 26 dient zum Einstellen der Steuerungselektronik 24 von einem Deaktivierungsmodus in einen Aktivierungsmodus. Mit anderen Worten: der Aufweckschaltkreis 26 weckt die Steuerungselektronik 24 wieder auf, nachdem diese eingeschlafen ist.

Der Akkumulator 3 enthält des Weiteren eine Datenschnittstelle 29 mit einem zweiten Transceiver 30 als Bestandteil eines Kommunikationssystems für eine differentielle Kommunikation zwischen dem Akkumulator 3 und der Werkzeugmaschine 2.

Die Temperaturüberwachung des Akkumulators 3 erfolgt mittels eines nicht gezeigten Heißleiters (auch NTC-Widerstand oder NTC-Thermistor genannt), der in dem Akkumulator 3 positioniert ist. Die Energiespeicherzellen 23 können auch als Akku-Zellen bezeichnet werden und dienen zum Aufnehmen, Speichern und Bereitstellen einer elektrischen Energie bzw. einer elektrischen Spannung.

Die Akku-Schnittstelle 22 ist an einer Seite des Gehäuses 21 positioniert. Die Akku-Schnittstelle 22 enthält eine Anzahl an Stromsteckern 27 zum Aufnehmen und Abgeben von elektrischem Strom sowie Datensteckern 28 zum Senden und Empfangen von Signalen zwischen der Werkzeugmaschine 2 und dem Akkumulator 3. Über die Stromstecker 27 kann der elektrische Strom von den Energiespeicherzellen 23 abgegeben werden.

Wie in Figur 1 und 2 gezeigt, sind die Stromstecker 27 des Akkumulators 3 mit den Stromanschlüssen 16 der Werkzeugmaschine 2 verbunden. Ebenso sind die Datenstecker 28 des Akkumulators 3 mit den Datenanschlüssen 17 der Werkzeugmaschine 2 verbunden.

Durch die Verbindung kann elektrischer Strom von den Energiespeicherzellen 23 des Akkumulators 3 zu der Werkzeugmaschine 2 fließen. Des Weiteren können Signale zur Kommunikation zwischen dem Akkumulator 3 und der Werkzeugmaschine 2 ausgetauscht werden.

Wie der Figur 1 zu entnehmen ist, ist der Aktivierungsschalter 13 an einer 5c Vorderseite des Handgriffs 5 positioniert. Durch ein Bewegen des Aktivierungsschalters 13 in Richtung A kann ein Signal von dem Aktivierungsschalter 13 an die Steuerung 9 gesendet werden, wodurch die Steuerung 9 wiederum ein Signal an die Steuerungselektronik 24 des Akkumulators 3 sendet. Durch das an die Steuerungselektronik 24 gesendete Signal wird elektrische Energie bzw. elektrischer Strom mit einem bestimmten Stromwert von dem Akkumulator 3 für den elektrischen Verbraucher der Werkzeugmaschine 2 und insbesondere den als Elektromotor ausgebildeten Antrieb 8 freigegeben. Die Werkzeugmaschine 2 hat eine (nicht gezeigte) Stromeinrichtung, mit der die Stromstärke des Versorgungstroms gemessen werden kann. Wenn ein Versorgungsstrom mit einer zulässigen Stromstärke gemessen wird, kann der Versorgungsstrom zu den elektrischen Verbrauchern der Werkzeugmaschine 2 fliessen. Alternativ oder zusätzlich kann die Strommesseinrichtung auch in dem Akkumulator 3 positioniert sein.

Um ein Signal entsprechend der Wegstrecke des Aktivierungsschalters 13 in Richtung A an die Steuerung 9 zu senden, enthält der Aktivierungsschalter 13 ein nicht gezeigtes Potentiometer, auch Poti genannt.

Wenn sich der Aktivierungsschalter 13 wieder in Richtung B bewegt, wird ein entsprechendes Signal mit Hilfe des (nicht gezeigten) Potentiometers an die Steuerung 9 gesendet, sodass kein elektrischer Strom mehr vom Akkumulator 3 zu der Werkzeugmaschine 2 fließt.

Die Kommunikation zwischen dem Akkumulator 3 und der Werkzeugmaschine 2 erfolgt über ein Kommunikationssystem in Form eines CAN-Datenbuses. Zur Teilnahme an dem Kommunikationssystem enthält sowohl der Akkumulator 3 als auch die Werkzeugmaschine 2 jeweils eine Datenschnittstelle 19, 29 mit einem Transceiver 20, 30. Die Transceiver 20, 30 sind dabei als CAN-Transceiver ausgestaltet. Wie in Figur 2 angedeutet ist der Transceiver 20 der Werkzeugmaschine über die Datenschnittstelle und einer ersten Kommunikationsleitung 31 (auch als COM-High- oder CAN-High-Leitung bezeichnet) sowie einer zweiten Kommunikationsleitung 32 (auch als COM-Low- oder CAN-Low-Leitung bezeichnet) und der Datenschnittstelle 29 mit dem Transceiver 30 des Akkumulators 3 verbunden. Wie ebenfalls der Figur 2 zu entnehmen ist, ist der Aufweckschaltkreis 26 des Akkumulators 3 mit der ersten Kommunikationsleitung 31, d.h. COM-High, verbunden. Alternativ kann der Aufweckschaltkreis 26 des Akkumulators 3 mit der zweiten Kommunikationsleitung 32, d.h. COM-Low, verbunden sein.

In dem Fall, dass sich die Werkzeugmaschine 2 und der Akkumulator 3 für eine gewisse Zeitdauer, d.h. mindestens 2 Minuten, nicht in Anwendung befindet, wird der Akkumulator 3 mit Hilfe der Steuerungselektronik 24 von einem Aktivierungsmodus automatisch in einen Deaktivierungsmodus versetzt. Wenn sich der Akkumulator 3 in dem Deaktivierungsmodus befindet, fließt kein elektrischer Strom von den Energiespeicherzellen 23 zur Steuerelektronik 24 und zu der Werkzeugmaschine 2. Darüber hinaus sind alle möglichen elektrischen Verbraucher des Akkumulators 3, wie z.B. die Steuerungselektronik 24, der Temperatursensor zur Überwachung der Akku-Temperatur oder dergleichen, ausgeschaltet. Der Deaktivierungsmodus dient zum Stromsparen, da die elektrische Spannung in den Energiespeicherzellen 23 keiner Last ausgesetzt ist.

Wenn nach einer bestimmten Zeitdauer die Verwendung der Werkzeugmaschine 2 und des Akkumulators 3 wiederaufgenommen werden soll, muss zunächst der Akkumulator 3 als Energiespender der Werkzeugmaschine 2 von dem Deaktivierungsmodus wieder in den Aktivierungsmodus gebracht werden. Zur erneuten Inbetriebnahme der Werkzeugmaschine 2 wird zunächst der Aktivierungsschalter 13 in Richtung A bewegt. Hierdurch wird ein Signal über die Steuerung 9 der Werkzeugmaschine 2 gesendet. Der Transceiver 20 der Werkzeugmaschine 2 sendet ein Signal (z.B. ein Bit) über die Datenschnittstelle 19, die erste und zweite Kommunikationsleitung 31, 32 an die Datenschnittstelle 29 und den Transceiver 30 des Akkumulators 3.

Zum Senden eines Signals in Form eines Bits über das Kommunikationssystem, wird sowohl die COM-High-Leitung 31 als auch die COM-Low-leitung 32 in einen dominanten Zustand versetzt. Der Aufweckschaltkreis 26 des Akkumulators 3 ist mit der COM-High-Leitung 31 verbunden. Um die Steuerungselektronik 24 des Akkumulators 3 von dem Deaktivierungsmodus wieder in einen Aktivierungsmodus einzustellen, benötigt der Aufweckschaltkreis 26 des Akkumulators 3 eine elektrische Spannung von mindestens 0,9 Volt. Zur Versorgung des Aufweckschaltkreises 26 mit einer ausreichenden elektrischen Spannung wird der Spannungswert von der COM-High-Leitung 31 im dominanten Zustand des als CAN-Datenbuses ausgestalteten Kommunikationssystems von dem Aufweckschaltkreis 26 detektiert. Der Spannungswert der COM-High-Leitung 26 in einem dominanten Zustand beträgt dabei 3,5 Volt, sodass eine ausreichend große Spannung zur Aktivierung des Aufweckschaltkreises 26 zur Verfügung steht. Alternativ ist es auch möglich, dass der Spannungswert mit 1,5 Volt der COM-Low bzw. zweite Kommunikationsleitung 32 zur Versorgung des Aufweckschaltkreises 26 mit einer ausreichenden elektrischen Spannung (d.h. größer als 0,9 Volt) verwendet wird. Der Aufweckschaltkreis 26 ist dafür mit der COM-Low bzw. zweite Kommunikationsleitung 32 verbunden.

Der Aufweckschaltkreis 26 stellt nach dem Detektieren des Spannungswerts der COM-High-Leitung bzw. der ersten Kommunikationsleitung 31 im dominanten Zustand die Steuerungselektronik 24 des Akkumulators 3 von dem Deaktivierungsmodus wieder in den Aktivierungsmodus. Entsprechendes gilt, wenn in einer alternativen Ausgestaltungsform der Aufweckschaltkreis 26 mit der COM-Low bzw. zweite Kommunikationsleitung 32 verbunden ist.

Im Aktivierungsmodus wird zur Versorgung der elektrischen Verbraucher, insbesondere des Elektromotors, ein bestimmter Stromwert von den Energiespeicherzellen 23 des Akkumulators 3 an die Werkzeugmaschine 2 gesendet. Darüber hinaus werden auch wieder alle Überwachungsfunktionen des Akkumulators 3, wie z.B. die Temperaturüberwachung, wiederaufgenommen.

Alternativ kann zur Aktivierung des Aufweckschaltkreises 26 des Akkumulators 3 auch den Spannungswert der COM-High-Leitung bzw. der ersten Kommunikationsleitung 31 im rezessiven Zustand detektiert werden. Hierbei wird eine Spannung mit 2,5 Volt von der COM-High-Leitung bzw. der ersten Kommunikationsleitung 31 an den Aufweckschaltkreis 26 gesendet. Da zum Aktivieren des Aufweckschaltkreises 22 eine Spannung größer als 0,9 Volt nötig ist, ist auch der Spannungswert der COM-High-Leitung bzw. der ersten Kommunikationsleitung 31 im rezessiven Zustand ausreichend.

Gemäß einer weiteren Alternative kann zur Aktivierung des Aufweckschaltkreises 26 des Akkumulators 3 auch den Spannungswert der COM-Low-Leitung bzw. der zweiten Kommunikationsleitung 32 im rezessiven Zustand detektiert werden. Auch in diesem Fall ist der Spannungswert größer als 0,9 Volt, nämlich ebenfalls 2,5 Volt.

## Patentansprüche

1. Verfahren zur Steuerung eines Akkumulators (3) an einer Werkzeugmaschine (2),
wobei der Akkumulator (3) eine erste Datenschnittstelle (29) sowie einen Aufweckschaltkreis (26) enthält zum Aktivieren einer Steuerungselektronik (24) des Akkumulators (3) und die Werkzeugmaschine (2) eine zweite Datenschnittstelle (19) sowie eine Steuerung (9) enthält, und wobei die Datenschnittstellen (19, 29) über eine erste und zweite Kommunikationsleitung (31, 32) für eine differentielle Kommunikation zwischen dem Akkumulator (3) und der Werkzeugmaschine (2) verfügt
**gekennzeichnet durch** die Verfahrensschritte
- Einstellen der Steuerungselektronik (24) des Akkumulators (3) in einen Deaktivierungsmodus, sodass kein Strom von dem Akkumulator (3) in die Steuerungselektronik (24) und zu der Werkzeugmaschine (2) fließt;
- Senden wenigstens eines Signals von der Werkzeugmaschine (2) zu dem Akkumulator (3) über die erste und zweite Kommunikationsleitung (31, 32);
- Aktivieren des Aufweckschaltkreises (26) zum Aktivieren einer Steuerungselektronik (24) durch Detektieren eines Spannungswertes von der ersten oder zweiten Kommunikationsleitung (31, 32), wobei der Spannungswert entweder dem dominanten oder rezessiven Zustand der ersten oder zweiten Kommunikationsleitung (31, 32) entspricht;
- Einstellen der Steuerungselektronik (24) des Akkumulators (3) in einen Aktivierungsmodus durch den Aufweckschaltkreis (26); und
- Freigabe einer Stromentnahme von dem Akkumulator (3) durch die Werkzeugmaschine (2).

2. System enthaltend einen Akkumulator (3) und eine Werkzeugmaschine (2) zur Durchführung des Verfahrens nach Anspruch 1,
**wobei** der Akkumulator (3) eine erste Datenschnittstelle (29) sowie einen Aufweckschaltkreis (26) enthält zum Aktivieren einer Steuerungselektronik (24) des Akkumulators (3) und die Werkzeugmaschine (2) eine zweite Datenschnittstelle (19) sowie eine Steuerung (9) enthält, und wobei die Datenschnittstellen (19, 29) über eine erste und zweite Kommunikationsleitung (31, 32) für eine differentielle Kommunikation zwischen dem Akkumulator (3) und der Werkzeugmaschine (2) miteinander verbunden sind.

3. Akkumulator (3) mit einer ersten Datenschnittstelle (29) sowie einen Aufweckschaltkreis (26) zum Aktivieren einer Steuerungselektronik (24) des Akkumulators (3), wobei die Datenschnittstellen (19, 29) über eine erste und zweite Kommunikationsleitung (31, 32), die für eine differentielle Kommunikation geeignet ist, verfügt, **wobei**
- der Akkumulator (3) geeignet ist in einen Deaktivierungsmodus zu schalten, in dem kein Strom vom Akkumulator (3) in die Steuerungselektronik (24) und zu einem Verbraucher fließt,
- der Akkumulator (3) geeignet ist zur Aktivierung des Aufweckschaltkreises zum Aktivieren der Steuerungselektronik (24) durch Detektieren eines Spannungswertes von der ersten und zweiten Kommunikationsleitung (31, 32), wobei der Spannungswert entweder dem dominanten oder rezessiven Zustand der ersten und zweiten Kommunikationsleitung (31, 32) entspricht,
- der Akkumulator (3) geeignet ist zum Einstellen der Steuerungselektronik (24) in einen Aktivierungsmodus durch den Aufweckschaltkreis, und
- der Akkumulator (3) geeignet ist zur Freigabe einer Stromentnahme.

## Claims

1. Method for controlling a rechargeable battery (3) on a power tool (2),
wherein the rechargeable battery (3) contains a first data interface (29) and a wake-up circuit (26) to activate control electronics (24) of the rechargeable battery (3), and the power tool (2) contains a second data interface (19) and a controller (9), and wherein the data interfaces (19, 29) have a first and a second communication line (31, 32) for differential communication between the rechargeable battery (3) and the power tool (2), **characterized by** the method steps of
- setting the control electronics (24) of the rechargeable battery (3) to a deactivation mode, with the result that no current flows from the rechargeable battery (3) into the control electronics (24) and to the power tool (2);
- transmitting at least one signal from the power tool (2) to the rechargeable battery (3) via the first and second communication lines (31, 32);
- activating the wake-up circuit (26) to activate control electronics (24) by detecting a voltage value from the first or second communication line (31, 32), the voltage value corresponding to either the dominant or the recessive state of the first or second communication line (31, 32);
- setting the control electronics (24) of the rechargeable battery (3) to an activation mode by means of the wake-up circuit (26); and
- enabling current to be drawn from the rechargeable battery (3) by the power tool (2).

2. System containing a rechargeable battery (3) and a power tool (2) for carrying out the method according to Claim 1,
wherein the rechargeable battery (3) contains a first data interface (29) and a wake-up circuit (26) to activate control electronics (24) of the rechargeable battery (3), and the power tool (2) contains a second data interface (19) and a controller (9), and wherein the data interfaces (19, 29) are connected to one another via a first and a second communication line (31, 32) for differential communication between the rechargeable battery (3) and the power tool (2).

3. Rechargeable battery (3) containing a first data interface (29) and a wake-up circuit (26) to activate control electronics (24) of the rechargeable battery (3), the data interfaces (19, 29) having a first and a second communication line (31, 32) suitable for differential communication, wherein
- the rechargeable battery (3) is suitable for switching to a deactivation mode, in which no current flows from the rechargeable battery (3) into the control electronics (24) and to a load,
- the rechargeable battery (3) is suitable for activating the wake-up circuit to activate the control electronics (24) by detecting a voltage value from the first and second communication lines (31, 32), the voltage value corresponding to either the dominant or the recessive state of the first and second communication lines (31, 32),
- the rechargeable battery (3) is suitable for setting the control electronics (24) to an activation mode by means of the wake-up circuit, and
- the rechargeable battery (3) is suitable for enabling current to be drawn.

## Revendications

1. Procédé de commande d'un accumulateur (3) sur une machine-outil (2),
l'accumulateur (3) contenant une première interface de données (29) et un circuit de réveil (26) destiné à activer l'électronique de commande (24) de l'accumulateur (3) et la machine-outil (2) contenant une deuxième interface de données (19) et une commande (9), et les interfaces de données (19, 29) disposant d'une première et d'une deuxième ligne de communication (31, 32) destinées à une communication différentielle entre l'accumulateur (3) et la machine-outil (2),
**caractérisé par** les étapes de procédé suivantes
- régler l'électronique de commande (24) de l'accumulateur (3) dans un mode de désactivation de sorte qu'aucun courant ne circule de l'accumulateur (3) vers l'électronique de commande (24) et vers la machine-outil (2) ;
- envoyer au moins un signal de la machine-outil (2) à l'accumulateur (3) par le biais de la première et de la deuxième ligne de communication (31, 32) ;
- activer le circuit de réveil (26) pour activer l'électronique de commande (24) par détection d'une valeur de tension à partir de la première ou de la deuxième ligne de communication (31, 32), la valeur de tension correspondant soit à l'état dominant soit à l'état récessif de la première ou de la deuxième ligne de communication (31, 32) ;
- régler l'électronique de commande (24) de l'accumulateur (3) dans un mode d'activation par le biais du circuit de réveil (26) ; et
- permettre un prélèvement de courant de l'accumulateur (3) par le biais de la machine-outil (2).

2. Système contenant un accumulateur (3) et une machine-outil (2) pour la mise en oeuvre du procédé selon la revendication 1,
l'accumulateur (3) contenant une première interface de données (29) et un circuit de réveil (26) destiné à activer l'électronique de commande (24) de l'accumulateur (3) et la machine-outil (2) contenant une deuxième interface de données (19) et une commande (9), et les interfaces de données (19, 29) étant reliées l'une à l'autre par le biais d'une première et d'une deuxième ligne de communication (31, 32) destinées à une communication différentielle entre l'accumulateur (3) et la machine-outil (2).

3. Accumulateur (3) comprenant une première interface de données (29) et un circuit de réveil (26) destiné à activer l'électronique de commande (24) de l'accumulateur (3), les interfaces de données (19, 29) disposant d'une première et d'une deuxième ligne de communication (31, 32) adaptées à la communication différentielle,
- l'accumulateur (3) étant adapté pour commuter dans un mode de désactivation dans lequel aucun courant ne circule de l'accumulateur (3) vers l'électronique de commande (24) et vers un consommateur,
- l'accumulateur (3) étant adapté pour activer le circuit de réveil afin d'activer l'électronique de commande (24) par détection d'une valeur de tension de la première et de la deuxième ligne de communication (31, 32), la valeur de tension correspondant soit à l'état dominant soit à l'état récessif des première et deuxième lignes de communication (31, 32),
- l'accumulateur (3) étant adapté pour régler l'électronique de commande (24) dans un mode d'activation par le circuit de réveil, et
- l'accumulateur (3) étant adapté pour permettre un prélèvement de courant.
